# EUROPEAN PATENT APPLICATION

(11) **EP 4 525 235 A1**
(43) Date of publication of application: **19.03.2025**
(21) Application number: 24199866.5
(22) Date of filing: 11.09.2024
(51) Int. Cl.: H02G 15/08, H01R 9/05, H01R 4/72, H01R 24/44, H02G 1/00, H01P 1/00, H01R 4/02, H01R 103/00

(54) **JUNCTURE ASSEMBLY FOR COAXIAL CABLE**

(30) Priority: 13.09.2023 NL 2035790
(71) Applicant: Poynting Antennas (Pty) Limited, 0157 Samrand (ZA)
(72) Inventor: FOURIE, Andries Petrus Cronje, 2193 Parkview (ZA)
(74) Representative: Mathys & Squire

(57) **Abstract**

A coaxial juncture assembly 10 has a characteristic impedance Z₀' and comprises an inner conductive formation 32 having opposed first and second ends 34.1, 34.2 which are connectable to an inner conductor of a coaxial cable and an inner conductor 18 of a port respectively. The cable has a characteristic impedance Z₀ and the inner conductor has a diameter d₁. The formation 32 has an outer diameter d₁', which is larger than d₁. A conductive tubular member 36 has an inner diameter D₁', a first end 38.1, a second end 38.2, a slot 40 and an inner surface area A'ᵢₙₙₑᵣ. The member 36 is connectable at end 38.1 thereof to an outer conductor of the cable and at the end 38.2 to an outer conductor of the port. The assembly 10 comprises a dielectric arrangement 42 having a dielectric constant ε_{eff}'. At least one of: a) ε_{eff}' and b) A'ᵢₙₙₑᵣ is configured such that a difference between Zₒ and Zₒ' is less than 3% and D₁ and D₁' varies by less than 5%.

## Description

### INTRODUCTION AND BACKGROUND

This invention relates to a juncture assembly for forming a permanent joint or juncture between a coaxial cable and a terminal device having a port or connection point with a coaxial conductor arrangement.

The terminal device may be a second coaxial cable, an RF connector, an RF electronic circuit, an antenna, an enclosure containing RF electronics, etc. Antennas and other radio frequency (RF) equipment are often provided with a first length of coaxial cable connected at one end thereof to the antenna and at the other end thereof to a connector. In use, the connector may be connected to a cooperating connector at an end of a second length of coaxial cable, to form a connection between the first and second cables.

Disadvantages of the cooperating connectors are that they are bulky, that a hermitical seal is required for many applications, that they are prone to failure over time and that as a result of deterioration of the connection, impedance mismatching may occur, which is most problematic at higher frequencies, such as above 2 Ghz.

It is known that a coaxial cable comprises an inner conductor having an outer diameter (d₁), an outer conductor having an inner diameter (D₁) and a body of dielectric material having an effective dielectric constant (ε_{eff}) between the inner and outer conductors. It is also known that the characteristic impedance (Z₀) of a coaxial cable is proportional to a ratio D₁/d₁. It is also known that Z₀ is inversely proportional to ε_{eff}. Furthermore, Z₀ is inversely proportional to a distributed capacitance per meter (C/m) between the inner and outer conductors. The distributed capacitance, in turn, is related to the inner surface area (Aᵢₙₙₑᵣ) of the outer conductor.

The practical reality of joining a coaxial cable to a terminal device is that in a juncture region, the diameter d₁ of the inner conductor is increased by the insertion of the inner conductor into a juncture inner conductive member or by combining two inner conductors. The resulting increase in average juncture inner member diameter in this region results in a lower characteristic impedance in this region. The characteristic impedance in the region can be maintained at the same value as that of the cable by proportionally increasing the diameter of a juncture outer conductor. However, this would cause an abrupt change in juncture outer conductor diameter which is undesirable. The applicant has identified a need for a juncture assembly and a method of forming a juncture with which the characteristic impedance in the region of the juncture may be maintained, without requiring the juncture outer conductor diameter to increase substantially from the cable outer diameter.

### OBJECT OF THE INVENTION

Accordingly, it is an object of the present invention to provide a coaxial juncture assembly and a method of joining a coaxial cable to a terminal device with which the above need may be satisfied and with which the applicant believes the aforementioned disadvantages may at least be alleviated or which may provide a useful alternative for the known juncture assemblies, devices and methods.

### SUMMARY OF THE INVENTION

According to the invention there is provided a coaxial juncture assembly for permanently joining a coaxial cable to a coaxial port or connection point of a terminal device, the port comprising an inner conductor and an outer conductor, the coaxial cable having a characteristic impedance Z₀ and comprising an inner conductor and an outer conductor separated by a dielectric body, the outer conductor of the coaxial cable having an inner diameter D₁, the coaxial juncture assembly having a characteristic impedance Z₀' and comprising:
- an inner electrically conductive formation having opposed first and second ends and an outer diameter, the opposed ends being connectable or connected to the inner conductor of the coaxial cable and of the port, respectively;
- an electrically conductive outer tubular member having opposed first and second ends, an inner diameter D₁', a slot extending from the first end to the second end and an effective inner surface area, the opposed first and second ends being connectable to the outer conductor of the coaxial cable and of the port, respectively; and
- a dielectric arrangement having an effective dielectric constant (ε_{eff}') located between the inner conductive formation and the conductive outer tubular member; wherein
- at least one of: a) the effective dielectric constant (ε_{eff}') and b) the effective surface area of the conductive outer tubular member is configured such that a difference between Zₒ and Zₒ' is less than 3% and D₁ and D₁' varies by less than 5%.

The inner conductive formation may comprise a cylindrical member defining openings towards the first and second ends respectively for receiving the inner conductor of the cable and the port respectively.

The openings may be in the form of first and second slits extending from the first end and the second end respectively.

The openings may be in the form of axially extending sockets defined at the first and second ends respectively.

In other embodiments, the inner conductive formation may comprise overlapping end regions of the cable and the port respectively, which are moulded in a cylindrical formation with a mouldable filler material, to have said outer diameter.

The mouldable filler material is preferably conductive and the cylindrical formation preferably has said outer diameter which is constant.

The dielectric arrangement may comprise a cylindrical body of a dielectric material defining a centre bore through the body.

The cylindrical body may comprise first and second longitudinally split halves, each half defining, in a face facing the other half, a semi-circular groove and wherein the semi-circular grooves collectively form the bore.

The cylindrical body may define further slots or internal pockets which decrease the effective dielectric constant (ε_{eff}') and hence increase the characteristic impedance of the assembly.

The slot of the conductive outer tubular member may be a longitudinal slot and may subtend an angle of larger than 90 degrees at a centre of the conductive outer tubular member.

In presently preferred embodiments the slot subtends an angle of larger than 120 degrees at the centre.

A region towards at least one of the first end and the second end of the conductive outer tubular member may be pre-tinned, alternatively may comprise a solderable material.

The conductive outer tubular member may be flexible.

The conductive outer tubular member may be resiliently flexible.

The regions towards the first end and the second end of the outer tubular member may define spaced windows.

The juncture assembly may comprise an inner shrinkable dielectric tube having a first wall thickness and which in use receives and radially constricts the inner conductive formation mounted in the bore of the dielectric assembly and the outer conductive tubular member embracing the dielectric assembly.

In use, the inner dielectric tube causes constrictive pressure which ensures ohmic contact between the conductive outer tubular member and the outer conductors of the cable and the port respectively as well as between the inner conductors of the cable and the port.

The juncture assembly may further comprise an outer shrinkable dielectric tube having a second wall thickness and which, in use, is mountable to receive the inner tube.

The outer dielectric tube is preferably longer than the conductive outer tubular member and, in use, extends to over, and to overlap with, an outer dielectric sleeve of at least one of the cable and the port, to provide a hermitic seal and mechanical reinforcement.

The first wall thickness may be larger than the second wall thickness.

At least one of the inner shrinkable tube and outer shrinkable tube is heat shrinkable.

According to another aspect of the invention there is provided a method of joining a coaxial cable comprising an inner conductor and an outer conductor to a port comprising an inner conductor and a coaxial outer conductor comprising the steps of:
- utilizing a coaxial juncture assembly as defined above;
- arranging regions towards the first and second ends of the conductive outer tubular member, which are pre-applied with a solderable material, and the outer conductors of respectively the cable and the port in overlapping relationship; and
- using a coaxial heating device which applies a quantum of heat energy over a short time to both regions to melt and solder the regions to the outer conductors of the cable and the port respectively, but by restricting of both the quantum of heat energy and time of application to limit damage to dielectric components in contact with the conductive outer tubular member and the outer conductors of the cable and the port.

### BRIEF DESCRIPTION OF THE ACCOMPANYING DIAGRAMS

The invention will now further be described, by way of example only, with reference to the accompanying diagrams wherein:
- figure 1: is an exploded perspective view of an example embodiment of a coaxial juncture assembly;
- figure 2: is a diagrammatic exploded view of a coaxial cable and a terminal device which comprises a port or connection point having a coaxial conductor arrangement and which cable and port or connection point are to be joined permanently to one another by the coaxial juncture assembly;
- figure 3: is a section on line III in figure 2;
- figure 4: is a transverse sectional view of a conductive outer tubular member of the example embodiment of the juncture assembly;
- figure 5: is a longitudinal sectional view of the coaxial cable and a terminal device (in the form of a second coaxial cable) joined permanently or spliced in end-to-end relationship by means of the example embodiment of the coaxial juncture assembly; and
- figure 6: is a section on line VI in figure 5.

### DESCRIPTION OF A PREFERRED EMBODIMENT OF THE INVENTION

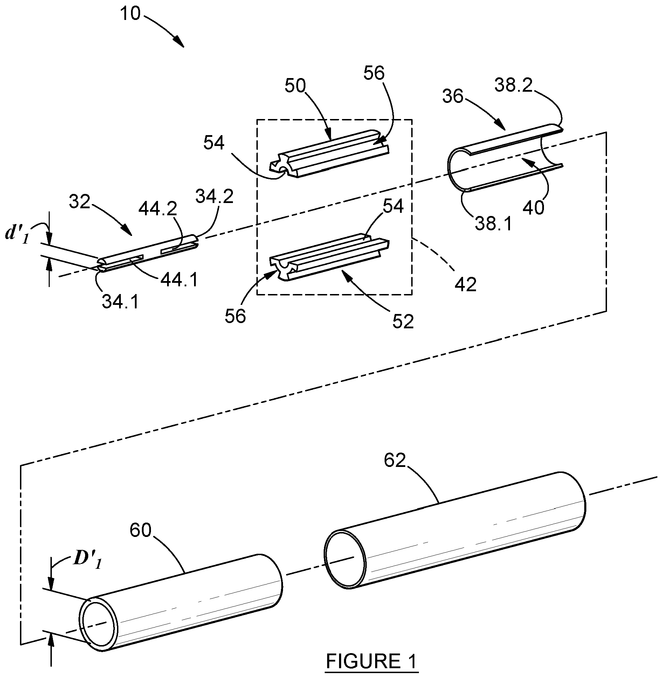

In figure 1, there is shown an exploded view of an example embodiment of a coaxial juncture assembly 10.

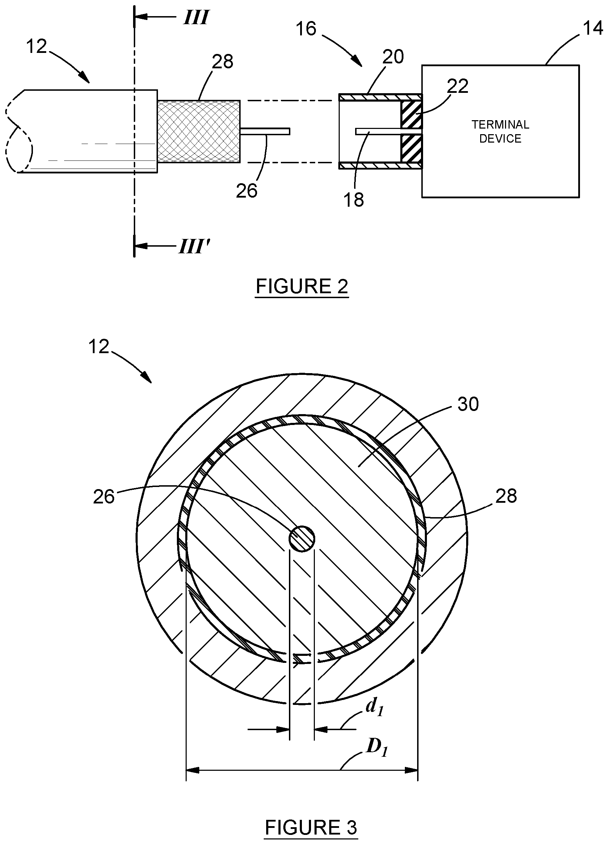

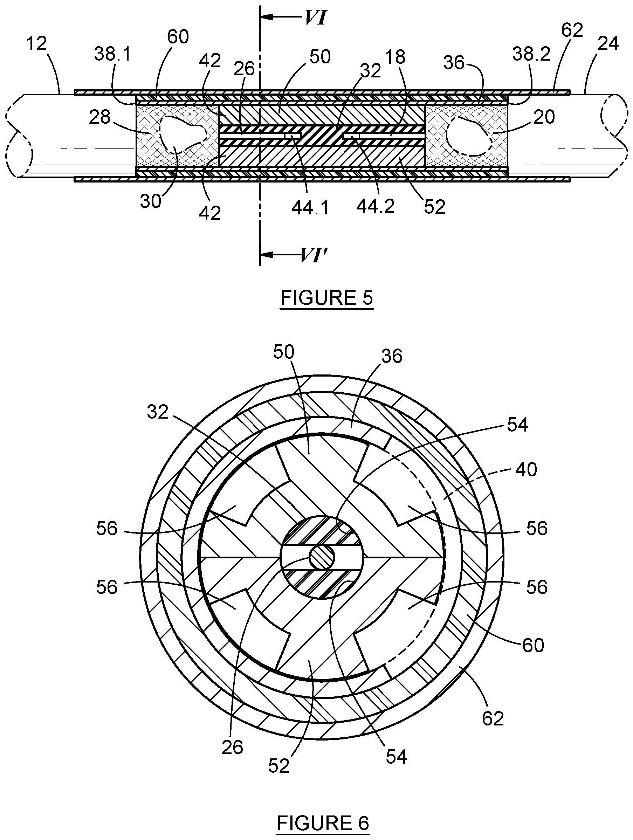

Referring to figure 2, in use, the juncture assembly 10 is used (as will be explained in more detail below) to join permanently to one another a coaxial cable 12 and a terminal device 14. The terminal device comprises a port or connection point 16 having a coaxial configuration or arrangement of an inner conductor 18 and an outer conductor 20 separated by a dielectric medium 22. The terminal device 14 may be any device having a coaxial port or connection point, such as any one of a second coaxial cable (such as cable 24 shown in figure 5), an RF connector, an RF electronic circuit, an antenna, an enclosure containing RF electronics (all not shown), etc.

Referring to figure 3 and as is well known in the art, the coaxial cable 12 comprises a centre or inner conductor 26 and an outer conductor 28 separated by a dielectric body 30. The coaxial cable has a characteristic impedance (Z₀). The centre conductor has an outer diameter of d₁. The outer conductor has an inner diameter of D₁.

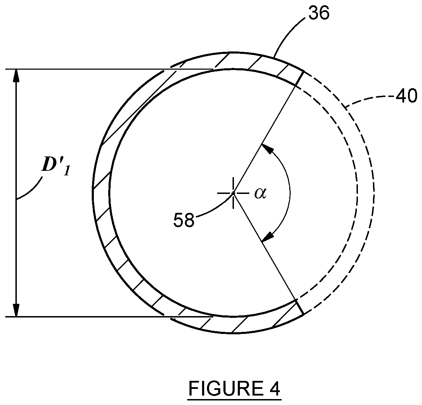

Referring to figures 1 to 4, the coaxial juncture assembly 10 has a characteristic impedance Zₒ' and comprises an inner conductive formation 32 having opposed first and second ends 34.1, 34.2 which are connectable or connected to the inner conductor 26 of the coaxial cable and the inner conductor 18 of the port respectively. The inner conductive formation 32 has an outer diameter d₁', which is larger than d₁. The juncture assembly 10 further comprises a conductive outer tubular member 36 having an inner diameter D₁', a first end 38.1 and a second end 38.2 with a slot 40 extending from the first to the second end. The outer tubular member 36 has an effective inner surface area A'ᵢₙₙₑᵣ. The outer tubular member is connectable at first end 38.1 thereof to the outer conductor 28 of the coaxial cable and at the second end 38.2 to the outer conductor 20 of the port. The juncture assembly 10 further comprises a dielectric arrangement 42 having an effective dielectric constant (ε_{eff}') located between the inner conductive formation 32 and the conductive outer tubular member 36. At least one of: a) the effective dielectric constant (ε_{eff}') and b) the effective inner surface area A'ᵢₙₙₑᵣ of the conductive outer tubular member 36 is configured such that a difference between Zₒ and Zₒ' is less than 3% and D₁ and D₁' varies by less than 5%.

In the example embodiment shown, the inner conductive formation comprises a cylindrical member 32 defining axial slots 44.1 and 44.2 extending from the first and second ends thereof respectively and for receiving the inner conductor 26 and the inner conductor 18 respectively. Hence, at the ends of the member 32, resiliently flexible jaws for gripping the inner conductors are formed. In other embodiments, blind bores or sockets (not shown) extending from the respective ends may be provided for receiving the inner conductors. In yet other embodiments (also not shown) the inner formation 32 may be formed by soldering the inner conductors 26 and 18 in overlapping relationship to one another, with or without a separate conductive member 32, utilizing a suitable filler metal. The soldered region may be moulded or formed to have a suitable, preferably circular, cross section having said outer diameter di'. In this case, a special moulding tool and heat applicator (for providing heat impulses of brief duration, but suitably high thermal energy) may be required.

The dielectric assembly 42 may comprise a cylindrical body of a dielectric material having a suitable dielectric constant and defining a centre bore. The body is preferably longitudinally split into first and second elongate parts or halves 50,52. Each of the halves define a semi-circular channel 54 which collectively form the centre bore for receiving the inner conductive formation 32 of the juncture assembly 10. The halves may define further internal pockets or grooves or slots 56 for air and which hence determine ε_{eff}' for the assembly 42. In other embodiments, a material with a suitable ε_{eff}' may be selected, so that the pockets or slots are not required.

The two halves 50,52 could serve to press closed the above resiliently flexible jaws at the ends of the inner conductive cylindrical member 32, to ensure a uniform final diameter d1' for the inner conductive member 32. This also ensures that the cable inner conductor 18 is clamped and achieves a conductive junction to the inner member 32. Furthermore, the two halves would allow for insertion of the inner cylindrical member 32 after connecting the cable inner 26 to the inner cylindrical member 32.

As best shown in figure 3, the slot 40 of the outer tubular member 36 typically subtends an angle α of larger than 90 degrees at a centre 58 of the outer tubular member. In preferred embodiments α may be larger than 120 degrees. The width of the slot 40 determines A'ᵢₙₙₑᵣ. The applicant has surprisingly found that for angles larger than 120 degrees there is a proportional relation between the inner surface area A'ᵢₙₙₑᵣ of the conductive outer tubular member 36 and Z₀'.

The outer conductive member 36 may be flexible or resiliently flexible to allow for manual manipulation and insertion into its bore (as shown in figure 5) of the juncture inner conductive member 32 and dielectric assembly 42, whereafter it can be closed or partially closed around the dielectric assembly to embrace the assembly. To this end, the outer conductive member may define perforations. The slot 40 in the outer conductive member 36 allows the member 36 to be radially constricted to force the dielectric halves 50, 52 to radially push the jaws of the inner conductive member 32 closed and/or ensure a tight fit between the inner conductive member 32 and the dielectric assembly 42. The outer tubular member 36 may further be manipulated to go or pass over the outer conductor 28 of cable 12 and the outer conductor 20 of the terminal device respectively, so that regions towards the opposed ends 38.1 and 38.2 of the outer tubular member overlap with the outer conductor conductors 28, 20 (as illustrated in figure 5). The regions may be pre-tinned. The regions may also define perforations or spaced windows (not shown) which may facilitate connecting the outer tubular member 36 to the outer conductor 28 of the cable and outer conductor 20 of the terminal device respectively, as will be described in more detail below. Alternatively, the outer tubular member may comprise a respective lip at each of its opposed ends which could slide underneath the cable outer conductor 28 and the outer conductor 20 of the terminal device.

One method of connecting the above overlapping end regions of the outer tubular member 36 to the cable outer conductor 28 and the outer conductor 20 of the terminal device comprises using a solderable thin sheet which is wrapped around the overlapping regions and the special heat applicator referred to above.

Hence, the method involves some pre-applied solder (tinning) or some "raw" solder roughly conforming to the regions to be joined, such as a thin solder sheet or cylindrical receptor made of solder. The heat applicator provides a cylindrical mould which, after having melted the solder, will ensure the soldered region forms a precisely dimensioned ("moulded") cylinder. Melting will be effected using a *"Quantum"* of heat energy (*Quantum* = temperature difference*time). It would be necessary to apply the required *"Quantum"* over as short a time period as practically possible. This is due to the fact that heat is very rapidly conducted away from the solder region to adjacent metal. Solder will melt once subjected to "quantum" > "quantum needed to melt given quantity of solder". Applying heat during a short period of time (about one (1) second) ensures a) a minimum of the applied quantum needed energy flows away from the solder region and b) minimal heat flowing to other parts in contact with solder region and since both the inner conductive formation and outer the conductive outer tubular member are in contact with dielectric parts, it minimises temperatures which could cause melting/deformation which will change Z₀.

Another method would be to provide protrusions (not shown) on the outer tubular member 36 where such protrusions would allow the outer tubular member to be pressure forced over or under the cable outer 28 and where such protrusions are shaped to resist movement in the opposite direction.

Another possible suitable method would be to use a crimping ferule (not shown) as is well known to persons skilled in this art.

The coaxial juncture assembly 10 further comprises a first and inner heat shrinkable dielectric tube 60 having a first wall thickness and a second and outer heat shrinkable dielectric tube 62 having a second wall thickness. The first wall thickness is preferably larger than the second wall thickness and the second tube may be longer than the outer conductive tubular member. The outer dielectric tube may incorporate a heat activatable glue. The inner tube 60 and optionally the outer tube 62 may be used as radially constrictive elements to achieve the necessary mechanical strength and conductive connection between outer tubular member 36 and the outer conductors 28, 20 respectively. Each of the inner tube 60 and outer tube 62 may comprise a single elongate tube length.

The juncture assembly 10 may be adapted to allow for the connection of two cables (splicing) but where the two cables are not connected to the assembly at the same time. This may require the dielectric assembly 42 and outer tubular member 36 to comprise two halves, each of which is separately and independently manipulatable, without affecting the other half. This may be achieved with one or more of the following adaptations. The tubular member 36 may comprise at a centre region thereof some mechanical means which allows for the halves on either side of the means to be opened and compressed without affecting the other half. This can be achieved by the member 36 defining a transverse slit or comprising some weak linkage members which allow movement of one half without substantially forcing the same radial movement on the other half. However, pull strength and conductivity must not be compromised. The dielectric assembly may also be split in two axially extending end to end halves to allow independent manipulation of the halves. Such halves may be hingably connected to each other using flexible or thin dielectric members or webs. At least one of the inner and outer tubes 60,62 may comprise at least first and second elongate tube parts which, in use, are arrangeable in end-to-end relationship and heat shrinkable separately from one another.

It will be appreciated that there are many variations in detail on the juncture assembly as herein defined and/or described. For example, the juncture assembly may be modified to allow for the connection of a coaxial cable to a port or connection point with radial dimensions different to that of the coaxial cable.

## Claims

1. A coaxial juncture assembly for permanently joining a coaxial cable to a coaxial port or connection point of a terminal device, the port comprising an inner conductor and an outer conductor, the coaxial cable having a characteristic impedance Z₀ and comprising an inner conductor and an outer conductor separated by a dielectric body, the outer conductor of the coaxial cable having an inner diameter D₁, the coaxial juncture assembly having a characteristic impedance Z₀' and comprising:
- an inner conductive formation having opposed first and second ends and an outer diameter, the opposed ends being connectable or connected to the inner conductor of the coaxial cable and of the port, respectively;
- a conductive outer tubular member having opposed first and second ends, an inner diameter D₁', a slot extending from the first end to the second end and an effective inner surface area, the opposed first and second ends being connectable to the outer conductor of the coaxial cable and of the port, respectively; and
- a dielectric arrangement having an effective dielectric constant (ε_{eff}') located between the inner conductive formation and the conductive outer tubular member; wherein
- at least one of: a) the effective dielectric constant (ε_{eff}') and b) the effective surface area of the conductive outer tubular member is configured such that a difference between Zₒ and Zₒ' is less than 3% and D₁ and D₁' varies by less than 5%.

2. The coaxial juncture assembly of claim 1 wherein the inner conductive formation comprises a cylindrical member defining openings towards the first and second ends respectively for receiving the inner conductor of the cable and the port respectively.

3. The juncture assembly of claim 2 wherein the openings are in the form of first and second slits extending from the first end and the second end respectively.

4. The juncture assembly of claim 2 wherein the openings are in the form of axially extending sockets defined at the first and second ends respectively.

5. The juncture assembly of claim 2 wherein the inner conductive formation comprises overlapping end regions of the cable and the inner conductor of the port which are moulded in a cylindrical formation with a heat activatable mouldable conductive filler material, to provide said outer diameter which is constant and while ensuring the inner conductors are bonded ohmically.

6. The juncture assembly of any one of claims 1 to 5 wherein the dielectric arrangement comprises a cylindrical body of a dielectric material defining a centre bore through the body.

7. The juncture assembly of claim 6 wherein the cylindrical body comprises first and second longitudinally split halves, each half defining in a face facing the other half a semi-circular groove and wherein the semi-circular grooves collectively form the bore.

8. The juncture assembly of any one of claims 6 and 7 wherein the cylindrical body defines at least one further slot or internal pocket which decreases the effective dielectric constant (ε_{eff}') and hence increases the characteristic impedance of the assembly.

9. The juncture assembly of any one of claims 1 to 8 wherein the slot of the outer tubular member is a longitudinal slot which subtends an angle of larger than 90 degrees at a centre of the outer tubular member.

10. The juncture assembly of claim 9 wherein the slot subtends an angle of larger than 120 degrees at the centre.

11. The juncture assembly of any one of claims 1 to 10 wherein regions towards the first end and the second end of the conductive outer tubular member are pre-tinned or comprises a solderable material.

12. The juncture assembly of any one of claims 1 to 10 wherein regions towards the first end and the second end of the conductive outer tubular member define spaced windows.

13. The juncture assembly of any one of claims 1 to 12 comprising an inner shrinkable dielectric tube having a first wall thickness and which, in use, radially constricts the inner conductive formation mounted in the bore of the dielectric assembly and the outer conductive tubular member embracing the dielectric assembly, in use, to cause pressure which ensures ohmic contact between the conductive outer tubular member and the outer conductors of the cable and port respectively as well as between the inner conductors of the cable and the port.

14. The juncture assembly of claim 13 comprising an outer shrinkable dielectric tube having a second wall thickness and which, in use, extends to over an outer dielectric sleeve of at least one of the cable and port, to provide a hermitic seal and mechanical reinforcement.

15. The juncture assembly as claimed in claim 14 wherein the outer tube incorporates a heat activatable glue.

16. The juncture assembly of any one of claims 13 to 15 wherein the first wall thickness is larger than the second wall thickness.

17. The juncture assembly as claimed in any one of claims 13 to 16 wherein at least one of the inner shrinkable tube and outer shrinkable tube is heat shrinkable.

18. A method of joining a coaxial cable comprising an inner conductor and an outer conductor to a port comprising an inner conductor and a coaxial outer conductor comprising the steps of:
- utilizing a coaxial juncture assembly as claimed in any one of claims 1 to 17;
- arranging regions towards the first and second ends of the conductive outer tubular member, which are pre-applied with a solderable material, and the outer conductors of respectively the cable and the port in overlapping relationship; and
- using a coaxial heating device which applies a quantum of heat energy over a short time to both regions to melt and solder the regions to the outer conductors of the cable and the port respectively, but by restricting of both the quantum of heat energy and time of application to limit damage to dielectric components in contact with the conductive outer tubular member and the outer conductors of the cable and the port.

19. The method of claim 18, insofar as it is dependent on claim 5, including the step of using the coaxial heating device to apply heat energy to activate the mouldable conductive filler material, to provide said outer diameter which is constant and while ensuring the inner conductors are bonded ohmically.

20. The method of claim 19 wherein the steps of a) applying the quantum of heat energy to both regions and b) the step of applying heat energy to activate the mouldable conductive filler are performed simultaneously.
